# EUROPEAN PATENT APPLICATION

(11) **EP 4 491 365 A1**
(43) Date of publication of application: **15.01.2025**
(21) Application number: 23185317.7
(22) Date of filing: 13.07.2023
(51) Int. Cl.: B29C 31/04, B29C 44/04, B29C 44/34, B29C 44/36, B29C 44/50, B29C 48/30, B29C 48/70, B29C 48/36, B29L 31/00

(54) **METHOD AND DEVICE FOR THE CONTINUOUS PRODUCTION OF GRADED POLYMER FOAMS**

(71) Applicant: Sulzer Management AG, 8401 Winterthur (CH); Materias S.r.l., 80122 Napoli (IT)
(72) Inventor: TAMMARO, Daniele, 80098 Ercolano (IT); NICOLAIS, Luigi, 80056 Ercolano (IT); DI MAIO, Ernesto, 80122 Napoli (IT); TROMMSDORFF, Ulla, 8057 Zürich (CH); WALKER, Claudio, 8405 Winterthur (CH); ERRICHIELLO, Fabrizio, 80126 Napoli (IT)
(74) Representative: Henkel & Partner mbB

(57) **Abstract**

A method for producing a graded polymer foam comprising the steps of:
a) providing a polymer melt containing at least one blowing agent,
b) providing a die comprising a die inlet, a die outlet, an outer die wall connecting the die inlet and the die outlet and bordering the die interior, at least one die channel extending within the die interior between the die inlet and the die outlet, at least one blowing agent injection means and at least one baffle extending within the die interior from a location downstream of the die inlet to a location upstream of the die outlet, wherein the at least one baffle subdivides the die channel, seen in the direction from the die inlet to the die outlet of the die, into at least two die sections, wherein the at least two die sections combine at the downstream end of the die,
c) feeding the polymer melt containing at least one blowing agent provided in step a) into the die inlet, through the die and through the die outlet of the die provided in step b),
d) injecting additional blowing agent through the at least one blowing agent injection means within the die into the polymer melt, and
e) mixing the polymer melt, after the blowing agent has been injected into it in step d) with at least one mixing means.

## Description

The present invention relates to a method for the continuous production of graded polymer foams, to a device for the continuous production of graded polymer foams and to articles produced therewith, such as articles in the form of profiles, sheets, boards, beads and the like.

Polymer foams, which are also denoted as expanded polymers, are cellular structures, which are characterized by a low density. Polymer foams are divided into closed-cell foams, open-cell foams, mixed-cellular foams and integral foams. While closed-cell foams comprise cells, which are completely surrounded by the solid polymer material and are filled with gas, the cells of open-cell foams are not completely surrounded by the solid polymer material and thus interconnected with each other. Due to this, open-cell foams may absorb liquid, such as water, whereas closed-cell foams do not. Mixed-cellular foams comprise open-cells as well as closed-cells, whereas integral foams have thick, non-cellular or at least essentially non-cellular outer walls and therebetween a cellular core, wherein the density reduces from the outer walls to the inner core essentially continuously.

Polymer foams are easily formable, have a low tensile strength, have a high acoustic absorption property and are furthermore characterized by a low thermal conductivity. On account of these properties, polymer foams are easily workable and are applied in various commercial areas. For instance, closed-cell foams, such as those made of polystyrene or polyurethane, are used as thermal insulating materials in a plurality of sectors of industry, e.g. as building insulation materials. Other examples of the commercial application of foams are acoustic absorption materials, cushioning, mattresses, mats and sponges.

Polymer foams may be made of nearly all commercially available polymers, such as ethylene-vinyl acetate, polyethylene, nitrile rubber, a copolymer of acrylonitrile and butadiene, polychloroprene, polyimide, polyester, polypropylene, polystyrene, polyurethane, polylactic acid and polyvinyl chloride.

Several methods for producing foam articles are known. One example is the direct injection expanded foam molding process, in which a pressurized polymer melt including a blowing agent is injected through nozzles into a mold. The blowing agent expands in the mold, in which a lower pressure is present than the pressure of the pressurized polymer melt, thus forming the polymer foam in the desired shape. Another example is to incubate polymer granulates in an autoclave at an elevated temperature and under pressure with a blowing agent, such as carbon dioxide, before the pressure is released and the temperature lowered so as to foam the granulates to foam beads. These foam beads may then be injected into a mold, before the foam beads are heat fused therein into the desired shape by the application of pressure and steam. Still another example, therefore, is to form expandable polymer beads by extruding a pressurized, blowing agent including polymer melt through the holes of a die and by granulating the polymer melt strands directly behind the dies in an underwater granulator, in which the polymer melt is cooled under pressure so as to avoid an expansion of the polymer strand. The expandable polymer beads may then be foamed and fused in a mold into an article having the desired shape. Still another example is to form a foamed profile, sheet or plank by extruding a pressurized, blowing agent including polymer melt through a die of appropriate shape.

The polymer foams obtained with the aforementioned methods are uniform polymer foams. Foams are described by different features on the level of a single cell, such as size, aspect ratio, orientation, amount, distribution of mass in the walls and struts, as well as on the level of the foam (i.e. the plurality of connected cells), such as density (mass), number density of cells and ratio of open to closed cells. A uniform foam is a foam, in which these features show no spatial variation, whereas a graded foam is a foam where one or more foam features vary in space.

Recently, it has been proposed to produce graded foams, which are foams being characterized by a gradient of the size, number density, aspect ratio and structure of the single cells. This gradient may exist in any direction or, in particular if the graded foam is produced by extrusion, along the cross-sectional direction and/or longitudinal direction of the produced profile, sheet or plank. As a consequence of the gradient, graded foams are characterized by a density gradient, which may exist in any direction or, in particular if the graded foam is produced by extrusion, along their cross-sectional direction and/or along their longitudinal direction. It has been found that graded foams are capable of higher performances with respect to uniform foams, such as having better acoustic absorption properties, improved thermal insulation properties, a better impact resistance, an improved stiffness, a better strength or the like. In turn, in structural applications abrupt changes in density could lead to large stress concentrations and thus to structural weaknesses. However, producing such graded polymer foams with reasonable capital expenditures and with reasonable operation costs is so far not possible. Typically, layered foams comprising two or more layers of polymer having a different density are produced by coextrusion or by layering several foamed materials after foam production. However, coextrusion methods require two or more extruders and lead not to a well, i.e. smoothly, graded polymer foam, but to an article being characterized by an abrupt change of cell morphology, such as cell size, and/or density at the interface of the single polymer layers.

For instance, US 4,206,165 discloses a method of producing a layered polymer foam article comprising a core made of a foamed, cellular polymer and a shell of solid, non-foamed polymer with a device comprising three extruders and a cylindrical die. While the mixture of polymer and blowing agent forming the cellular polymer core of the article is introduced into the die by the first of the three extruders, the polymer without blowing agent forming the shell of the article is introduced into the die at opposite locations at the periphery of the cylindrical die through the other two of the three extruders. On account of necessitating three extrudes, the device is complex and connected with high capital expenditures as well as with high operational costs. In addition, the foamed article has not, seen in the cross-sectional direction of the foamed article, a smooth gradient of cell size or density, respectively, but is characterized by an abrupt change of the size, number density, aspect ratio and structure of the single cells and density, respectively, at the interface between the core layer and the shell layer.

In view of this, the object underlying the present invention is to provide a method and a device for producing and in particular for continuously producing a graded polymer foam, which is easy and simple, which requires only low capital expenditures and low operation costs, and which in particular allows to produce graded foams, in which the cell morphology - such as cell size and/or form of the pores forming the cells - or density, respectively, of the polymer foam changes along its cross-sectional direction and/or along its longitudinal direction in the form of a smooth gradient.

In accordance with the present invention, this object is solved by providing a method for producing a graded polymer foam comprising the steps of:
a) providing a polymer melt containing at least one blowing agent,
b) providing a die comprising a die inlet, a die outlet, an outer die wall connecting the die inlet and the die outlet and bordering the die interior, at least one die channel extending within the die interior between the die inlet and the die outlet, at least one blowing agent injection means and at least one baffle extending within the die interior from a location downstream of the die inlet to a location upstream of the die outlet, wherein the at least one baffle subdivides the die channel, seen in the direction from the die inlet to the die outlet of the die, into at least two die sections, wherein the at least two die sections combine at the downstream end of the die,
c) feeding the polymer melt containing at least one blowing agent provided in step a) into the die inlet, through the die and through the die outlet of the die provided in step b),
d) injecting additional blowing agent through the at least one blowing agent injection means within the die into the polymer melt, and
e) mixing the polymer melt, after the blowing agent has been injected into it in step d) with at least one mixing means.

This solution is based on the finding that by splitting a blowing agent containing polymer melt with a baffle so as to lead a partial stream of the polymer melt containing the blowing agent(s) through one of the at least two die sections and the other, remaining partial stream of the polymer melt containing the blowing agent(s) through another of the at least two die sections, and that by injecting additional blowing agent - i.e. further blowing agent in addition to that already contained in the polymer melt being introduced into the die - at one or more locations within the die into the polymer melt and mixing the polymer melt, after the blowing agent has been injected into it in step d) with at least one mixing means, a graded polymer foam is obtained at the die outlet, in which the size, number density, aspect ratio and structure, such as the form of the pores, of the single cells of the polymer foam changes along any of its directions, such as along its cross-sectional direction and/or along its longitudinal direction, in the form of a gradient. There are virtually no limitations in terms of the number, extent and steepness of the gradients. More specifically, the aforementioned method allows tuning the density and morphology of the graded polymer foam according to the desire across the whole profile of the foam by appropriately varying the concentration of the blowing agent in the polymer. Thereby, graded polymer foams, such as profiles, sheets, boards, beads and the like, may be re-designed in order to achieve new or improved properties, such as improved acoustic absorption, better thermal insulation, increased impact resistance, improved stiffness, higher strength or the like, or in order to save polymer material keeping the properties of the graded foamed polymer foams produced unaltered with respect to the uniform counterpart. In addition, the method in accordance with the present invention is easy and simple and requires only low capital expenditures and low operation costs, because it does not require a plurality of extruders, but only one die.

As set out above "graded polymer foam" means in accordance with the present invention any polymer foam, in which at least one feature of a single cell, such as size, aspect ratio, orientation, amount, distribution of mass in the walls and struts, and/or at least one feature of the foam (i.e. the plurality of connected cells), such as density (mass), number density of cells and ratio of open to closed cells, varies in space. The at least one feature may vary along any direction of the polymer foam, such as along its cross-sectional direction and/or along its longitudinal direction. The variation may be more or less stepwise and is preferably ideally gradually. In contrast to a graded polymer foam, whereas a uniform polymer foam is a foam, in which these features show no spatial variation.

A "smooth gradient" of the polymer foam means in accordance with the present invention any polymer foam, in which at least one foam feature, such as the foam density, varies not stepwise, i.e. wherein, seen in the cross-section of the polymer foam and from the center to the periphery of the polymer foam, the difference between the density of any section of the polymer foam and the density an adjacent section being closer to the center or to the periphery of the polymer foam than the other section is at most 5%, and/or wherein, seen in the longitudinal direction of the polymer foam and from the location of the blowing agent injection means to a downwardly location, the difference between the density of any section of the polymer foam and the density of an adjacent section being closer to the blowing agent injection means or further downward from the blowing agent injection means is at most 5%.

In accordance with the present invention, in step a) a polymer melt containing at least one (first) blowing agent is provided, to which, while it flows through the die, additional blowing agent is injected through the at least one blowing agent injection means within the die. Each of the first blowing agent and of the additional (or second, respectively) blowing agent may be one blowing agent or a mixture of two or more different blowing agents. Moreover, the first blowing agent may be the same blowing agent as the additional (or second, respectively) blowing agent. Thus, the terms first blowing agent, additional blowing agent and second blowing agent do not refer to the composition of the blowing agent, but to the point of time, when it is injected into the polymer melt, i.e. in step a) or in step d).

The present invention is not particularly limited concerning the form of the die provided in step b). In fact, the form of the die will correspond to that of the product shape. For instance, the die may have a rectangular, square, circular, oval, elliptical or polygonal cross-sectional form.

In accordance with the present invention, in step b) a die is provided, which comprises a die inlet, a die outlet, an outer die wall connecting the die inlet and the die outlet and bordering the die interior, at least one die channel extending within the die interior between the die inlet and the die outlet, at least one blowing agent injection means and at least one baffle extending within the die interior from a location downstream of the die inlet to a location upstream of the die outlet, wherein the at least one baffle, which is preferably a wall, subdivides the die channel, seen in the direction from the die inlet to the die outlet of the die, into at least two die sections, wherein the at least two die sections combine at the downstream end of the die. The present invention is not particularly limited concerning the geometry and dimensions of the at least one baffle. For instance, the at least one baffle may be a plate having, seen in the top view, a rectangular, oval, square or polygonal form.

The present invention is not particularly limited concerning the form of the die channel or the single sections of the die channel, respectively. For instance, the die channel or one or more or all sections of the die channel, respectively, may have a rectangular, square, circular, oval, elliptical or polygonal cross-sectional form. However, it is preferred that at least one of the sections of the die channel has an at least essentially circular cross-sectional form or the form of an annular ring and thus, seen three-dimensionally, the form of at least essentially a cylinder or a hollow cylinder. Even more preferably, at least two and preferably all of the sections of the die channel have an at least essentially circular cross-sectional form or the form of an annular ring and thus, seen three-dimensionally, the form of at least essentially a cylinder or a hollow cylinder. Again, essentially circular means in this connection that, seen in the cross-section, the area of the non-ideal circle deviating from the area of an ideal circle having the same midpoint as the non-ideal circle amounts to at most 10%, preferably at most 5%, more preferably at most 1% and most preferably 0%. Likewise thereto, a form of at least essentially a (hollow) cylinder means in this connection that the area of the non-ideal (hollow) cylinder deviating from the area of an ideal (hollow) cylinder having the same midpoint as the non-ideal cylinder amounts to at most 10%, preferably at most 5%, more preferably at most 1% and most preferably 0%.

Preferably, in step b) a die is provided, which comprises as at least one baffle, which subdivides the die channel, seen in the direction from the die inlet to the die outlet of the die, into an upstream die channel section extending from the die inlet to the upstream end of the baffle, into a downstream die channel section extending from the downstream end of the baffle to the die outlet and into a middle die channel section extending from the upstream end of the baffle to the downstream end of the baffle, wherein the baffle subdivides the middle die channel section into a first die channel subsection and into one or more other die channel subsections, wherein the upstream die channel section splits at the upstream end of the middle die channel section into the die channel subsections of the middle die channel section, and wherein the die channel subsections of the middle die channel section combine at the downstream end of the middle die channel section to the downstream die channel section.

In accordance with a particular preferred embodiment of the present invention, in step b) a die is provided, which comprises as at least one hollow baffle, which subdivides the die channel, seen in the direction from the die inlet to the die outlet of the die, into an upstream die channel section extending from the die inlet to the upstream end of the hollow baffle, into a downstream die channel section extending from the downstream end of the hollow baffle to the die outlet and into a middle die channel section extending from the upstream end of the hollow baffle to the downstream end of the hollow baffle, wherein the hollow baffle subdivides the middle die channel section, seen in the cross-section of the middle die channel section, into a central die channel subsection extending within the hollow baffle and into one or more outer die channel subsections extending outside of the hollow baffle, wherein the upstream die channel section splits at the upstream end of the middle die channel section into the central die channel subsection and the one or more outer die channel subsections of the middle die channel section, and wherein the central die channel subsection and the one or more outer die channel subsections of the middle die channel section combine at the downstream end of the middle die channel section to the downstream die channel section. Particularly preferably, each of the upstream die channel section, of the central die channel subsection of the middle die channel section and of the downstream die channel section have an at least essentially circular cross-sectional form, whereas the one or more outer die channel subsections of the middle die channel section have the cross-sectional form of an annular ring. In this case, the hollow baffle subdivides the middle die channel section, seen in the radial direction of the middle die channel section, into a central die channel subsection extending within the hollow baffle and into one or more outer die channel subsections extending outside of the hollow baffle.

Thus, it is particularly preferred that in step b) a die is provided, which comprises a die inlet, a die outlet, an outer die wall connecting the die inlet and the die outlet and bordering the die interior, a die channel extending within the die interior between the die inlet and the die outlet, at least one blowing agent injection means and a hollow baffle extending within the die interior from a location downstream of the die inlet to a location upstream of the die outlet, wherein the hollow baffle subdivides the die channel, seen in the direction from the die inlet to the die outlet of the die, into an upstream die channel section extending from the die inlet to the upstream end of the hollow baffle, into a downstream die channel section extending from the downstream end of the hollow baffle to the die outlet and into a middle die channel section extending from the upstream end of the hollow baffle to the downstream end of the hollow baffle, and wherein the hollow baffle subdivides the middle die channel section, seen in the radial direction of the middle die channel section, into a central die channel subsection extending within the hollow baffle and into one or more outer die channel subsections extending outside of the hollow baffle, wherein the upstream die channel section splits at the upstream end of the middle die channel section into the central die channel subsection and the one or more outer die channel subsections of the middle die channel section, and wherein the central die channel subsection and the one or more outer die channel subsections of the middle die channel section combine at the downstream end of the middle die channel section to the downstream die channel section. This means that all the aforementioned sections and subsections forming the die channel, which extends within the die interior between the die inlet and the die outlet, i.e. all die channel sections and die channel subsections are connected with each other. Thus, the blowing agent containing polymer melt flows through the die inlet into the upstream channel section, from there through the middle die channel section by being split into a partial stream flowing through the central die channel subsection and into another partial stream flowing through the outer die channel subsection(s), before both partial streams are recombined into the downstream die channel and flow through the downstream die channel and through the die outlet.

A particular advantage of the method in accordance with the present invention is that it may be performed continuously. Accordingly, it is preferred that the method is actually performed continuously, wherein the polymer melt containing the blowing agent provided in step a) is fed in step c) continuously into the die inlet, through the die and through the die outlet.

The kind of the blowing agent injection into the polymer melt in step d), i.e. whether i) the blowing agent is injected continuously into the polymer melt or the injection is interrupted from time to time and whether ii) the blowing agent is injected into the polymer melt in constant amount or in varying amount, depends, from which kind of gradient is desired. If a gradient in the length direction of the foamed polymer product shall be achieved, the amount of blowing agent injected in step d) into the polymer melt should vary over time so that a density gradient and cell size gradient in the length direction of the foamed product adjusts during the method. Therefore, it is preferred for achieving a gradient in the length direction of the foamed polymer that the blowing agent is injected in step d) non-continuously and/or in a varying amount over time into the polymer melt.

However, if a density gradient and cell size gradient in the cross-section of the foamed product shall be achieved, the blowing agent is injected in step d) preferably continuously and in a constant amount.

If the blowing agent is injected in step d) continuously and in a varying amount, a density gradient and cell size gradient may be achieved in the length direction as well as in the cross-section of the foamed product.

In accordance with the present invention, the blowing agent is injected in step d) through the at least one blowing agent injection means within the die into the polymer melt. Good results are in particular obtained, when the blowing agent is injected in step d) through at least one blowing agent injection means being located upstream of the upstream end of the baffle, which is preferably a hollow baffle, and being preferably located in a short distance upstream of the upstream end of the baffle, which is preferably a hollow baffle. Thereby, it is achieved that the blowing agent cannot distribute uniformly over the cross-section of the die channel, before the upstream die channel section splits at the upstream end of the middle die channel section into the first die channel subsection and into the one or more other die channel subsections, which are preferably a central die channel subsection and one or more outer die channel subsections of the middle die channel section, thus maintaining the gradient when the polymer melt flows through the middle die channel section. Therefore, in accordance with a preferred embodiment of the present invention the blowing agent is injected in step d) into the polymer melt in a position being, seen in the direction from the die inlet to the die outlet of the die, upstream of the upstream end of the (hollow) baffle and preferably at a position being 50% to 1% and preferably 20% to 1% of the distance between the die inlet and the upstream end of the (hollow) baffle distant from the upstream end of the hollow baffle. Moreover, it is preferred in this embodiment that the blowing agent is injected in step d) into the polymer melt at a position being 30% to 70% and preferably 45% to 55% of the diameter of the die interior distant from the upstream end of the (hollow) baffle, when the die interior has a circular cross-section. When the diameter of the interior varies along the length axis of the die, the diameter at the cross-section, where the blowing agent injection means is arranged, is decisive with this regard. In addition to this blowing agent injection means being located upstream of the upstream end of the (hollow) baffle one or more further blowing agent injection means may be arranged within the interior of the die, such as in the central die channel subsection and/or in the one or more outer die channel subsections and/or in the upstream die channel section.

Depending on the direction of gradient to be achieved in the foamed product, i.e. where in the cross-section of the foamed product the highest density shall be formed, the blowing agent injection means may be arranged at any position of the cross-section of the interior of the die. If the lowest density shall be achieved in the centre of the foamed product, then it is preferred that the blowing agent is injected in step d) into the polymer melt at a position being, seen in the cross-section (i.e. in case of a circular die channel, in the radial direction) of the die, 30 to 70%, preferably 40 to 60% and more preferably 45 to 55%, such as about 50%, of the length of a line extending between two opposite locations of the inner sides of the outer die wall and through the midpoint of the cross-sectional area, or, in other words, at or close to the centre of the cross-section of the interior of the die. Again, in addition to the blowing agent injection means being located respectively, one or more further blowing agent injection means may be arranged within the interior of the die, such as in the central die channel subsection and/or in the one or more outer die channel subsections and/or in the upstream die channel section, i.e. the same or a different blowing agent may be injected at any other position in the interior of the die.

In a further development of the idea of the present invention, it is suggested that in the aforementioned particularly preferred embodiment the hollow baffle comprises at its upstream end an opening being the upstream end of the central die channel subsection, wherein the opening of the hollow baffle extends, seen in the radial direction or cross-section, respectively, of the die, from a first position on a line extending between two opposite locations of the outer die wall and through the midpoint of the cross-sectional area to a second position on the line, wherein the blowing agent is injected in step d) into the polymer melt at a position being upstream of the upstream end of the hollow baffle at a position being, seen in the radial direction of the die, between the first and second position on the line. In other words, it is preferred that the blowing agent injection means is arranged in this variant of the aforementioned embodiment shortly of upstream the opening and, seen in the cross-section, at a height of the opening of the hollow baffle. Again, in addition to the blowing agent injection means being located respectively, one or more further blowing agent injection means may be arranged within the interior of the die, such as in the central die channel subsection and/or in the one or more outer die channel subsections and/or in the upstream die channel section, i.e. the same or a different blowing agent may be injected at any other position in the interior of the die.

However, if the highest density shall be achieved in the centre of the foamed product, then it is preferred that the blowing agent is injected in step d) into the polymer melt i) in a position being, seen in the direction from the die inlet to the die outlet of the die, upstream of the upstream end of the hollow baffle and ii) at a position being, seen in the radial direction of the die, 70 to 100%, and preferably 80 to 100% and preferably 90 to 100% of the length of a line extending between two opposite locations of the inner sides of the outer die wall and through the midpoint of the cross-sectional area. In other words, the blowing agent injection means is arranged in this embodiment shortly upstream of the upstream end of the hollow baffle and at or close to the inner wall of the outer die wall. Again, in addition to the blowing agent injection means being located respectively, one or more further blowing agent injection means may be arranged within the interior of the die, such as in the central die channel subsection and/or in the one or more outer die channel subsections and/or in the upstream die channel section, i.e. the same or a different blowing agent may be injected at any other position in the interior of the die.

In a further embodiment of the present invention, the blowing agent injection means is not located upstream of the upstream end of the hollow baffle, but at or shortly downstream of the upstream end of the hollow baffle. For instance, the hollow baffle comprises at its upstream end an opening being the upstream end of the central die channel subsection, wherein the blowing agent injection means is arranged at a position being located within the opening, i.e. the blowing agent is injected in step d) into the polymer melt at a position being located within the opening of the hollow baffle. As the position of the blowing agent injection means, the outlet of the blowing agent injection means is meant, at which the blowing agent actually gets firstly into contact with the polymer melt. Again, in addition to the blowing agent injection means being located respectively, one or more further blowing agent injection means may be arranged within the interior of the die, such as in the central die channel subsection and/or in the one or more outer die channel subsections and/or in the upstream die channel section, i.e. the same or a different blowing agent may be injected at any other position in the interior of the die.

In still a further embodiment of the present invention, even if less preferred, the blowing agent is injected in step d) into the polymer melt at a position being located in the central die channel subsection. Again, in addition to the blowing agent injection means being located respectively, one or more further blowing agent injection means may be arranged within the interior of the die, such as in the central die channel subsection and/or in the one or more outer die channel subsections and/or in the upstream die channel section, i.e. the same or a different blowing agent may be injected at any other position in the interior of the die.

In yet a further embodiment of the present invention, even if less preferred, the blowing agent is injected in step d) into the polymer melt at a position being located at least in one of the one or more outer die channel subsections. Again, in addition to the blowing agent injection means being located respectively, one or more further blowing agent injection means may be arranged within the interior of the die, such as in the central die channel subsection and/or in the one or more outer die channel subsections and/or in the upstream die channel section, i.e. the same or a different blowing agent may be injected at any other position in the interior of the die.

Good results are in particular obtained, when the die comprises in total one or two blowing agent injection means, wherein all of these are located upstream of the upstream end of the hollow baffle, so that all of the blowing agents are injected during step d) into the polymer melt upstream of the upstream end of the hollow baffle. For instance, if two blowing agent injection means are provided, preferably both are located at the same (short) distance upstream of the upstream end of the hollow baffle, but at different positions in the cross-section of the interior of the die. This allows for obtaining a particular fine and precise gradient of the density or cell size, respectively. For instance, if the lowest density shall be achieved in the centre of the foamed product, the first of the two blowing agent injection means may be located at a position being, seen in the radial direction of the die, 45 to 55%, such as about 50%, of the length of a line extending between two opposite locations of the inner sides of the outer die wall and through the midpoint of the cross-sectional area, whereas the second of the two blowing agent injection means is located at a position being, seen in the radial direction of the die, 35 to less than 45%, such as about 40%, of the length of the line.

It is proposed in a further development of the idea of the present invention that the die interior has a circular cross-section, and that the hollow baffle has a circular cross-section and comprises an upstream section and a downstream section, wherein the downstream section has an at least essentially constant diameter and the upstream section tapers from its downstream end to its upstream end (i.e. seen in the direction of the die outlet to the die inlet), thus forming at the upstream end a central opening. Essentially constant diameter means in this connection that the difference between the sum of the deviations of all the diameters drawn through any point of the circumference of the cross-section of the downstream section of the hollow body and the average diameter of all the diameters amounts to at most 10%, preferably at most 5%, more preferably at most 1% and most preferably 0%.

Good results are in particular obtained, when each of the upstream die channel section, of the downstream die channel section, of the central die channel subsection and of the hollow baffle has a circular cross-section and the one or more outer die channel subsections have an annular cross-section. Preferably, the inner diameter as well as the outer diameter of the one or more outer die channel subsections are at least essentially constant.

In all of the aforementioned and all of the following embodiments, it is preferred that the diameter of the downstream channel section tapers in the direction from the die inlet to the die outlet.

The hollow baffle may comprise an upstream section and a downstream section, wherein the downstream section has an at least essentially constant diameter, and wherein the diameter of the upstream section extends, seen in the direction from the die inlet to the die outlet.

The upstream die channel section may comprise an upstream section and a downstream section, wherein the diameter of the upstream section extends, seen in the direction from the die inlet to the die outlet, and wherein the downstream section has an at least essentially constant diameter. Alternatively, the whole upstream die channel section may have an at least essentially constant diameter.

In accordance with a further particularly preferred embodiment of the present invention, the shear rate of the flow of the polymer melt is controlled at the upstream end of the central die channel subsection to be 10 sec⁻¹ or more. Thereby, an irrotational shear flow of the polymer melt is achieved, i.e. a flow having no vorticity. This is particularly preferred, because it leads to a more effective breakup and thus dispersion of the blowing agent bubbles being injected via the at least one blowing agent injection means into the die channel in the polymer melt. Because the irrotational shear flow is a flow in which the rigid body rotation part of the velocity is zero, all of the energy of the flow is consumed to stretch the blowing agent bubbles without any rotation, and, when the blowing agent bubbles are sufficiently stretched, the blowing agent bubbles break so that sufficiently small blowing agent bubbles with a narrow bubble size distribution for an optimal dispersion thereof in the polymer melt are obtained. The so obtained size of blowing agent bubbles after breakup preferably amounts to 0.01 to 10 µm, which is small enough to induce a complete solubilization of the blowing agent bubbles within the polymer melt, despite the limited residence time of the polymer melt within the die.

In order to adjust the shear rate of the flow of the polymer melt to the desired value, it is suggested in a further development of the idea of the present invention to control the shear rate of the flow of the polymer melt by flowing the polymer melt through a shear flow control means into the central die channel subsection, wherein the shear flow control means is preferably arranged in the upstream die channel section. Moreover, it is preferred that the shear flow control means is an orifice, which is connected with the upstream end of the hollow baffle. Good results are in particular obtained, when the orifice comprises an upstream section and a downstream section, wherein, seen in the direction from the die inlet to the die outlet, the upstream section of the orifice converges, whereas the downstream section of the orifice diverges. The orifice comprises, seen in the cross-section of the die, at the interface between the upstream section and the downstream section of the orifice a central orifice leading into the central die channel subsection and one or more peripheral flow channels leading into the outer die channel subsections. Converging means in this connection that the volume of the hollow part of the orifice reduces in the direction from the die inlet to the die outlet. This is for instance achieved, when the converging upstream section of the orifice is two-dimensionally, seen in the longitudinal section of the die, concave or three-dimensionally, seen from the cross-section of the die inlet in direction of the die outlet, the interior of the top part of a cone. Likewise thereto, diverging means in this connection that the volume of the hollow part of the orifice increases in the direction from the die inlet to the die outlet. This is for instance achieved, if the diverging upstream section of the orifice is two-dimensionally, seen in the longitudinal section of the die, convex or three-dimensionally, seen from the cross-section of the die outlet in direction of the die inlet, the interior of the top part of a cone. Orifice means in this connection any opening. The term orifice is used in this connection only in order to easily distinguish between the opening of the upstream section of the hollow baffle, which is denoted here as opening, from the openings of the orifice, which are denoted here as orifice and peripheral flow channels.

As set out above, the volume of the hollow part of the upstream converging section of the orifice reduces in the direction from the die inlet to the die outlet, which means that the upstream converging section comprises, seen in the length section, one or more inclined walls. For instance, the upstream converging section of the orifice has, seen in the longitudinal section from the die inlet to the die outlet, the form of a two-side open trapeze, wherein the left side of the trapeze is open, the right side of the trapeze is open and defines the central orifice and the two flanks of the trapeze are inclined with regard to the vertical axis. The converging angle is defined as the angle between the two flanks of the trapeze in the longitudinal section. In tendency, the irrotational shear rate of the polymer flow is larger as higher the converging angle is, the higher the ratio of the diameter of the orifice and the diameter of the central orifice and the higher the mass volume of the polymer melt flowing through the central orifice. Good results are in particular obtained, when the angle between the inclined flanks of the upstream converging section of the orifice and the vertical axis, which is here denoted as the converging angle, is 30° or less, more preferably 20° or less, still more preferably 15° or less and most preferably 5 to 15°.

For a flow rate of the polymer equal to 0.0125 m³/h, the ratio of the diameters of the converging section is preferably between 1.5 and 6, more preferably between 2 and 3.

As further set out above, the volume of the hollow part of the downstream diverging section of the orifice increases in the direction from the die inlet to the die outlet, which means that also the downstream diverging section comprises, seen in the length section, one or more inclined walls. For instance, the downstream diverging section of the orifice has, seen in the longitudinal section from the die inlet to the die outlet, the form of a two-side open trapeze, wherein the right side of the trapeze is open, the left side of the trapeze is open and defines the central orifice and the two flanks of the trapeze are inclined with regard to the vertical axis. Good results are in particular obtained, when the angle between the inclined flanks of the downstream diverging section of the orifice and the vertical axis, which is here denoted as diverging angle, is 30° or less, more preferably 20° or less, still more preferably 15° or less and most preferably 5 to 15°.

In accordance with a further preferred embodiment of the present invention, the mass volume of the polymer melt led through the one or more outer die channel subsections is controlled by using a shear flow control means. For instance, the shear flow control means comprises 1 to 20, preferably 3 to 15, more preferably 4 to 12, more preferably 6 to 10 and most preferably 8 screws, which are provided on the outer wall of the one or more outer die channel subsections and which may be moved so as to gradually decrease the flowable volume of the one or more outer die channel subsections. The inline control of the two flow rates, i.e. of gas and polymer, is usually challenging in polymer processing. However, it has been found in the present invention that a mechanical system comprising the aforementioned screws allows to easily and simply modify the polymer flow rate ratio between the outer channel and the middle channel flow. Thereby, it is possible to fine control the density gradient of the final foamed product. For instance, thereby a tuning of 20 to 30% of the density gradient is possible.

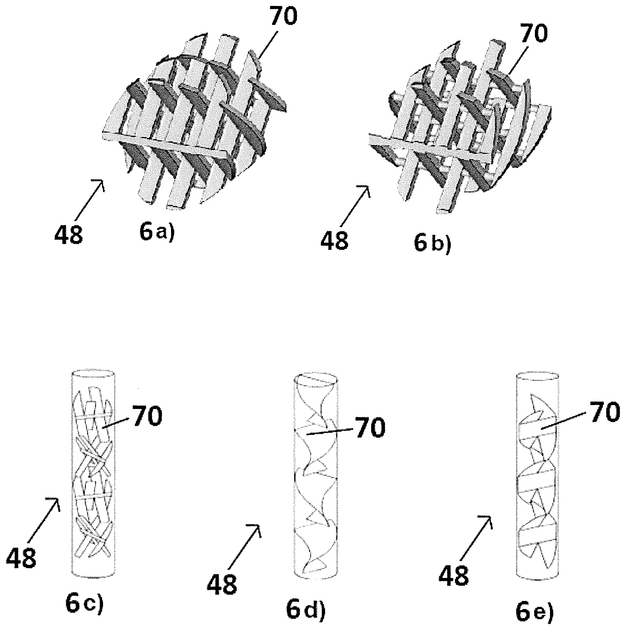

In accordance with the present invention, the polymer melt is mixed in step e), after the blowing agent has been injected into it in step d), with at least one mixing means, in order to achieve a particular uniform distribution of the blowing agent in the polymer melt flowing through the die. The present invention is not limited concerning the kind of mixing means. Good results are in particular obtained, when the at least one mixing means is a static mixer. A static mixer is a precision engineered device for the continuous mixing of fluid materials, without moving components. Static mixers deliver a high level of mixing efficiency and are used in many chemical processes. More specifically, static mixer means any mixer, which does not comprise any moving part and does in particular not comprise any rotating part and any such mixer may be used in the present invention. Static mixers usually produce a mixing effect by generating a turbulent flow due to static, i.e. non-moving elements, such as plates, bars, crossbars, baffles, helically formed deflection means, grids and the like. If these elements are hollow, heat transfer medium may be flowed through the elements so that the respective static mixer has heat exchanging capabilities. Suitable examples for static mixers, are x-type static mixers, spiral/helical-type static mixers, quattro-type static mixers, baffle plate-type static mixers, turbulator strips-type static mixers and any combination of two or more of the abovementioned mixer types. X-type static mixers comprise deflection means in the form of bars, crossbars, plates or the like having in a plan view and/or side view and/or cross-sectional view a x-like form. Such x-type static mixers are described for instance in WO 2010/066457 A1, EP 1 206 962 A1, EP 2 158 027 B1 and EP 0 655 275 B1 and are commercially available from Sulzer Chemtech Ltd, Winterthur, Switzerland under the tradenames SMX, SMXL and SMX plus as well as from Fluitec, Neftenbach, Switzerland under the tradename CSE-X. Spiral/helical-type static mixers have a helically formed deflection means and are described for instance in US 3,743,250 A, whereas quattro-type static mixers comprise deflection means forming chamber-like mixing sections and are described for instance in EP 2 548 634 B1 and in EP 0 815 929 B1. While baffle plate-type static mixers comprise usually longitudinal deflection means and are described for instance in EP 1 510 247 B1 and in US 4,093,188 A, turbulator strip-type static mixers comprise in a tube a plurality of elongated strips, each of which being formed by a series of alternating deflection panels successively joined together by for example substantially triangular bridging portions with the strips being held together and anchored substantially on the axis of the tube by alternate ones of the bridging portions and the other bridging sections being disposed adjacent the inner wall of the tube and are described for instance in US 4,296,779 A. Other suitable static mixers are distributed from Sulzer Chemtech AG under the tradenames CompaX, SMI, KVM, SMV and GVM and from Stamixco AG, Wollerau, Switzerland under the tradename GVM. In view of the above, it is preferred that at least one and more preferred that all of the at least one static mixer of the at least two distributors is selected from the group consisting of x-type static mixers, spiral/helical-type static mixers, quattro-type static mixers, baffle plate-type static mixers, turbulator strips-type static mixers and any combination of two or more of the above mentioned mixer types. More preferably, the static mixers are radial mixers, wherein adjacent radial static mixers are more preferably shifted, for instance at an angle of 90° in relation to a neighboring radial static mixer, such as those shown below in figures 6a and 6b. However, other designs may be envisioned, such as that shown below in figures 6c to 6e.

It is proposed in a further development of the idea of the present invention that in step e) 2 to 20 and more preferably 5 to 10 mixers are used. Still more preferably, in step e) 2 to 20 and more preferably 5 to 10 static mixers are used.

At least one and preferably all of the at least one mixing means is/are arranged in the die channel downstream of the at least one blowing agent injection means. In the preferred embodiment, in which the die comprises a die channel comprising a middle die channel section, at least one and preferably all of the at least one mixing means is/are arranged in middle die channel section of the die channel. In the particular preferred embodiment of the present invention, in which the die comprises a central die channel subsection and one or more peripheral flow channels leading into the outer die channel subsections, it is preferred that at least one and preferably all of the at least one mixing means is/are arranged in the central die channel subsection and/or in at least one of the one or more outer die channel subsections of the middle section of the die channel.

Most preferably, the die comprises 2 to 20, more preferably 5 to 10 static mixers, which are arranged in the central die channel subsection and/or in at least one of the one or more outer die channel subsections of the middle section of the die channel. It is particularly preferred that the mixer(s) is/are arranged in outer die channel subsections of the middle section of the die channel, when the blowing agent injection means is arranged, seen in the cross-section, in the peripheral area of the die, whereas the mixer(s) is/are preferably arranged in central die channel subsection, when the blowing agent injection means is arranged, seen in the cross-section, in the central area of the die.

The present invention is not particularly restricted concerning the kind of the blowing agent injection means. In the simplest embodiment, the blowing agent injection means is a pipe, through which the blowing agent is pumped. If the pressure within the pipe is higher than that within the interior of the die, no polymer melt will enter into the pipe. Preferably, the blowing agent injection means is a pipe comprising a closure, so that the pipe may be closed, when no blowing agent is pumped through the pipe or when the blowing agent is pumped with a lower pressure through the pipe as the pressure within the die. The closure may be any element, such as a metal plate, closing the outlet of the blowing agent injection means, as long as necessary. For instance, the element may be pressed by means of a spring against the outlet of the blowing agent injection means, thus closing the outlet of the blowing agent injection means, until the gas is pressed through the blowing agent injection means to the outlet with a pressure being higher than the spring tension.

Alternatively, the injection means may be a magnet valve being controlled by a control means.

Still alternatively, the injection means may be an active detachment system, e.g. ultrasound, vibrations induced to the injector or pulsation the blowing agent flow.

Still alternatively, the injection means may comprise a porous media, such as described for instance in EP 1 892 035 B1.

The polymer melt containing the blowing agent provided in step a) may be produced in an extruder and preferably in a twin-screw extruder. For instance, the polymer may be fed into the extruder, which is then molten therein, before the blowing agent is injected at a downstream section of the extruder into the polymer melt. The so obtained polymer melt may be fed directly into step c) or may be first cooled, for instance a melt cooler, and/or homogenized, for instance in a mixer, such as a dynamic or preferably static mixer.

The present invention is not particularly limited concerning the chemical nature of the used polymer. For instance, the method in accordance with the present invention is suitable for polymers being selected from the group consisting of polylactic acid, polystyrene, polyester, polyolefine, thermoplastic polyurethane, copolymers of one or more of the aforementioned and arbitrary combinations of two or more of the aforementioned polymers.

The present invention is also not particularly restricted concerning the chemical nature of the blowing agent. Good results are for instance obtained, when the blowing agent is selected from the group consisting of C₃₋₆-alkanes, cyclopentane, carbon dioxide, nitrogen, helium and arbitrary combinations of two or more of the aforementioned blowing agent.

In accordance with a further aspect, the present invention relates to a die comprising a die inlet, a die outlet, an outer die wall connecting the die inlet and the die outlet and bordering the die interior, at least one die channel extending within the die interior between the die inlet and the die outlet, at least one blowing agent injection means and at least one baffle extending within the die interior from a location downstream of the die inlet to a location upstream of the die outlet, wherein the at least one baffle subdivides the die channel, seen in the direction from the die inlet to the die outlet of the die, into at least two die sections, wherein the at least two die sections combine at the downstream end of the die, and wherein the die comprises downstream of the at least one blowing agent injection means at least one mixing means.

Preferably, the at least one baffle subdivides the die channel, seen in the direction from the die inlet to the die outlet of the die, into an upstream die channel section extending from the die inlet to the upstream end of the baffle, into a downstream die channel section extending from the downstream end of the baffle to the die outlet and into a middle die channel section extending from the upstream end of the baffle to the downstream end of the baffle, wherein the baffle subdivides the middle die channel section into a first die channel subsection and into one or more other die channel subsections, wherein the upstream die channel section splits at the upstream end of the middle die channel section into the die channel subsections of the middle die channel section, and wherein the die channel subsections of the middle die channel section combine at the downstream end of the middle die channel section to the downstream die channel section, and wherein at least one mixing means is arranged in any of the first die channel subsection and one or more other die channel subsections of the middle die channel section.

In accordance with a particularly preferred embodiment of the present invention, the die comprises a die inlet, a die outlet, an outer die wall connecting the die inlet and the die outlet and bordering the die interior, a die channel extending within the die interior between the die inlet and the die outlet, at least one blowing agent injection means and a hollow baffle extending within the die interior from a location downstream of the die inlet to a location upstream of the die outlet, wherein the hollow baffle subdivides the die channel, seen in the direction from the die inlet to the die outlet of the die, into an upstream die channel section extending from the die inlet to the upstream end of the hollow baffle, into a downstream die channel section extending from the downstream end of the hollow baffle to the die outlet and into a middle die channel section extending from the upstream end of the hollow baffle to the downstream end of the hollow baffle, and wherein the hollow baffle subdivides the middle die channel section, seen in the radial direction of the middle die channel section, into a central die channel subsection extending within the hollow baffle and into one or more outer die channel subsections extending outside of the hollow baffle, wherein the upstream die channel section splits at the upstream end of the middle die channel section into the central die channel subsection and the one or more outer die channel subsections of the middle die channel section, wherein the central die channel subsection and the one or more outer die channel subsections of the middle die channel section combine at the downstream end of the middle die channel section to the downstream die channel section, and wherein at least one mixing means is arranged in any of central die channel subsection and one or more outer die channel subsections of the middle die channel section.

It is proposed in a further development of the idea of the present invention that the die comprises 2 to 20 and more preferably 5 to 10 mixers. Still more preferably, the die comprises 2 to 20 and more preferably 5 to 10 static mixers.

All aforementioned features related to the die and mentioned with regard to the method are also valid for the claimed die.

It is in particular preferred that the die comprises a shear flow control means, which comprises preferably 1 to 20, more preferably 3 to 15, yet more preferably 4 to 12, still more preferably 6 to 10 and most preferably 8 screws, which are provided on the outer wall of the one or more outer die channel subsections and which may be moved so as to gradually decrease the flowable volume of the one or more outer die channel subsections.

In a further development of the idea of the present invention, it is suggested that the die further comprises an orifice. Preferably, the orifice comprises an (upstream) converging section and a (downstream) diverting section. While the volume of the hollow part of the converging section of the orifice reduces in the direction from the die inlet to the die outlet, the opposite is valid for the diverging section of the orifice, the hollow part volume thereof is increasing in the direction from the die inlet to the die outlet. More specifically, the converging section of the orifice has, seen in the longitudinal section from the die inlet to the die outlet, the form of a two-side open trapeze, wherein the left side of the trapeze is open, the right side of the trapeze is open and defines the central orifice of the hollow baffle and the two flanks of the trapeze are inclined with regard to the vertical axis. The angle α between the inclined flanks of the converging section of the orifice and the vertical axis, which is here denoted as converging angle α, is about 10°. Also the diverting section of the orifice has, seen in the longitudinal section from the die inlet to the die outlet, the form of a two-side open trapeze, wherein the right side of the trapeze is open, the left side of the trapeze is open and defines the central orifice of the hollow baffle and the two flanks of the trapeze are inclined with regard to the vertical axis. The angle β between the inclined flanks of the diverging section of the orifice and the vertical axis, which is here denoted as converging angle β, is about 10°. Preferably, the orifice comprises at the interface, seen in the cross-section of the die, a central orifice leading downstream of the orifice through the opening of the hollow baffle into the central die channel subsection. Moreover, the orifice comprises at the interface, seen in the cross-section of the die, two or more peripheral flow channels leading of the orifice into two or more outer die channel subsections.

In a further aspect, the present invention relates to a foaming machine comprising an extruder with an extruder outlet and an aforementioned die. The die inlet of the die is directly or indirectly connected to the extruder outlet.

Preferably, the extruder outlet is connected to a melt cooler comprising an outlet, which is connected to a static mixer comprising an outlet, which is connected to the die inlet of the die.

Moreover, it is preferred that the extruder is a twin-screw extruder.

Specific embodiments in accordance with the present invention are subsequently described with reference to the appended drawings and by examples.
- Fig. 1: is a schematic cross-sectional view of a die in accordance with one embodiment of the present invention.
- Fig. 2: is a schematic view of a machine comprising the die shown in figure 1.
- Fig. 3: is a schematic side view of die in accordance with another embodiment of the present invention.
- Fig. 4a: is a schematic longitudinal sectional view of a die in accordance with another embodiment of the present invention.
- Fig. 4b-d: are schematic cross-sectional views at different cross-sectional locations of the die shown in figure 3a.
- Fig. 5a: is a schematic longitudinal sectional view of a die in accordance with another embodiment of the present invention.
- Fig. 5b-d: are schematic cross-sectional views at different cross-sectional locations of the die shown in figure 1.
- Fig. 6a to e: show different types of static mixers being useable in the die in accordance with the present invention.

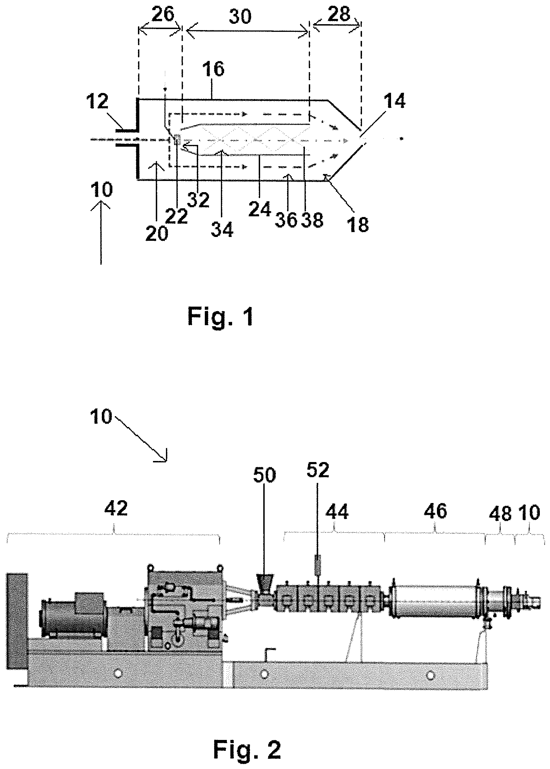

The die 10 being schematically shown in figure 1 comprises a die inlet 12, a die outlet 14 and an outer die wall 16 connecting the die inlet 12 and the die outlet 14. The outer die wall 16 borders the die interior 18, within which a die channel 20 extends between the die inlet 12 and the die outlet 14. In addition, the die 10 comprises a blowing agent injection means 22 and a hollow baffle 24. In turn, the hollow baffle 24 extends within the die interior 18 from a location downstream of the die inlet 12 to a location upstream of the die outlet 14 so that there is a distance between the die inlet 12 and the upstream end of the hollow baffle 24 as well as there is a distance between the downstream end of the hollow baffle 24 and die outlet 14. Thus, the hollow baffle 24 subdivides the die channel 20, seen in the direction from the die inlet 12 to the die outlet 14 of the die 10, into an upstream die channel section 26 extending from the die inlet 12 to the upstream end of the hollow baffle 24, into a downstream die channel section 28 extending from the downstream end of the hollow baffle 24 to the die outlet 14 and into a middle die channel section 30 extending from the upstream end of the hollow baffle 24 to the downstream end of the hollow baffle 24. The die 10 has at its upstream section a cylindrical shape and tapers at its downstream end into the die outlet 14. In turn, the hollow baffle 24 has at its downstream section a cylindrical shape and tapers at its upstream end, seen in the direction from the die outlet 14 to the die inlet, to an opening 32, i.e. in flow direction the diameter of the upstream section of the hollow baffle 24 extends. The blowing agent injection means 22 is located shortly upstream of the opening 32 of the hollow baffle 24, i.e. upstream of the upstream end of the hollow baffle 24. The hollow baffle 24 subdivides the middle die channel section 30 into a central die channel subsection 34 being located within the hollow baffle 24 and into an annular outer die channel subsection 36 being arranged on the peripheral surface of the wall forming the hollow baffle 24 and more specifically between the peripheral surface of the wall forming the hollow baffle 24 and the die wall 16. Several static mixers 38 are arranged within the central die channel subsection 34.

During operating the die 10 - so as to perform the method in accordance with the present invention -, a polymer melt containing blowing agent being dispersed therein, which has for instance been prepared in an extruder positioned upstream of the die 10, is fed through the die inlet 12 into the interior 18 of the die 10 and thus through the upstream die channel section 26 of the die 10. Upstream of the upstream end of the hollow body 24 additional blowing agent is injected into the polymer melt via the blowing agent injection means 22. As indicated by the arrows in figure 1, the polymer melt then splits into a partial stream, which is led through the opening 32 of the hollow baffle 24 into and through the central die channel subsection 34, whereas the remaining partial stream of the polymer melt is led into and through the outer die channel subsection 36 of the middle die section 30 of the die 10. Both partial streams recombine downstream of the hollow body 24 in the downstream die channel subsection 28 and flow through the die outlet 14, where the polymer melt foams due to the abrupt pressure reduction at the die outlet 14. On account of the inertia of the polymer melt containing the blowing agent, on account of the distance between the blowing agent injection means 22 and the opening 32 of the hollow baffle 24 and on account of the speed of the polymer melt containing blowing agent, the further blowing agent being injected into the polymer melt through the blowing agent injection means 22 does not uniformly distribute within the polymer melt over the cross-sectional area of the die 10. On the contrary, a gradient in the concentration of the further blowing agent adjusts over the cross-sectional area of the die 10, wherein the blowing agent concentration in the polymer melt, seen in the cross-section, gradually decreases from the midpoint of the cross-sectional area of the die 10 to the die wall 16. On account of the same parameters, i.e. on account of the inertia of the polymer melt containing blowing agent, on account of the low distance between the downstream end of the hollow baffle 24 and the die outlet 14 and on account of the speed of the polymer melt containing blowing agent, such a gradient in the concentration of the blowing agent over the cross-sectional area of the die 10 also exists at the die outlet. Therefore, the foam being produced upon foaming of the polymer melt at or after the die outlet 14 has a core with a comparable low density and a comparable large cell size of the foam pores due to the higher amount of blowing agent being present there during the foaming, whereas this density gradually increases and the cell size of the foam pores gradually decreases from the core to the surface of the foam.

Figure 2 schematically shows a foaming machine 40 comprising the die shown in figure 1. The foaming machine 40 comprises, from left to right, a drive unit 42, a twin-screw extruder 44, a melt cooler 46, a static mixer 48 and the die 10 as shown in figure 1. Furthermore, the twin-screw extruder 44 is connected with a polymer filling funnel 50 and with a blowing agent dosing unit 52. During the operation of the foaming machine, the polymer is continuously fed via the polymer filling funnel 50 into the twin-screw extruder 44, in which the polymer is molten. Furthermore, the blowing agent is continuously fed via the blowing agent dosing unit 52 into the polymer melt flowing through the twin-screw extruder 44 so as to produce a polymer melt containing blowing agent, wherein the blowing agent is dispersed in the polymer melt. The so obtained polymer melt is then led through the melt cooler 46, in order to reduce the temperature of the polymer melt, then led through the static mixer 48, in order to improve the uniform dispersion of the blowing agent in the polymer melt, then led through the die 10 and finally foamed at or after the die outlet 14.

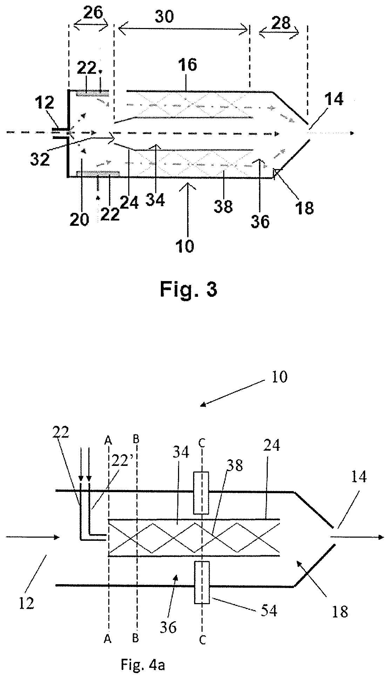

The die 10 being schematically shown in figure 3 is similar to that shown in figure 1. However, the blowing agent injection means 22 of the die 10 of figure 3 is not arranged at the height of the opening 32 of the hollow baffle 24, i.e. not in the centre of the interior of the die. On the contrary, the blowing agent injection means 22 of the die 10 of figure 3 is arranged below the die wall 16, i.e. at the height of the outer die channel subsection being arranged downstream thereof. Furthermore, the static mixers 38 are not arranged in the central die channel subsection 34, but in the annular die channel subsection 36.

During operating the die 10 shown in figure 3 so as to perform the method in accordance with the present invention, the further blowing agent is injected into the portion of the polymer melt flowing along the inner wall of the die, i.e. at the radial outer end of the cross-sectional area of the die. Consequently, a reverse blowing agent concentration gradient to that of figure 1 adjusts, i.e. during the operation of the die 10 shown in figure 2 a blowing agent concentration gradient adjusts, wherein the blowing agent concentration in the polymer melt gradually increases from the midpoint of the cross-sectional area of the die 10 to the die wall 16. On account thereof the foam produced upon foaming of the polymer melt at the die outlet 14 has a core with a comparable high density and a comparable small cell size of the foam pores due to the lower amount of blowing agent being present there during the foaming, whereas this density gradually decreases and the cell size of the foam pores gradually increases from the core to the surface of the foam.

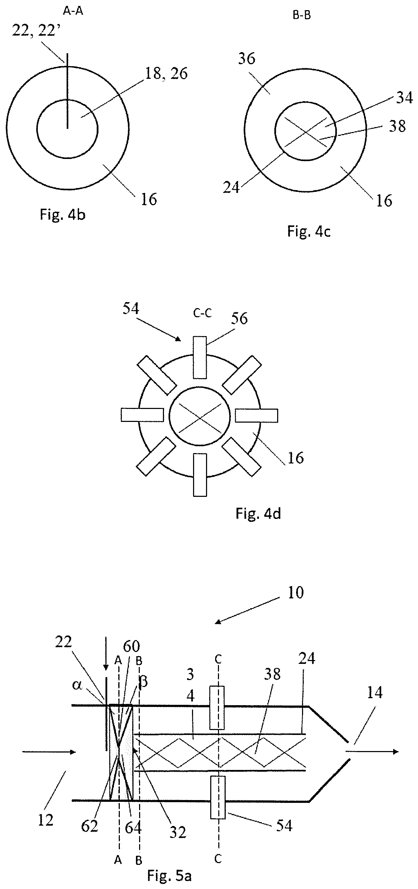

The die 10 being schematically shown in figures 4a to 4d is similar to that shown in figure 1, but further comprises a second blowing agent injection means 22' and a shear flow control means 54. While the first blowing agent injection means 22 is arranged with its outlet being arranged at the centre of the interior 18 of the die 10, the second blowing agent injection means 22' is arranged radially distant thereof. However, the outlets of both blowing agent injection means 22, 22' are arranged at the same distance upstream of the upstream end of the hollow baffle 24. In other words, the first blowing agent injection means 22 is arranged at a position being 50% of the length of a line extending between two opposite locations of the inner sides of the outer die wall and through the midpoint of the cross-sectional area, whereas the second blowing agent injection means 22' is arranged at a position of about 40% thereof. As further shown in figure 4a and in more detail in figure 4b, which is a cross-sectional view along the plane A-A shown in figure 4a (i.e. upstream of the upstream end of the hollow baffle 24) and showing from the direction of the die outlet 14 to the die inlet 14 and thus into the upstream die channel section 26 and interior 18 of the die, respectively, and in figure 4c, which is a cross-sectional view along the plane B-B shown in figure 4a (i.e. downstream of the upstream end of the hollow baffle 24) and showing into the central die channel subsection 34, the upstream die channel section 26 splits in the middle die channel section 30 into the central die channel subsection 34 and the annular outer die channel subsection 36, which are both separated from each other by the hollow baffle 24. Several static mixers 38 are arranged in the central die channel subsection 26. As shown in figure 4a and in particular in figure 4d, which is a cross-sectional view along the plane C-C shown in figure 4a, the shear flow control means 54 comprises 8 screws 56, which are provided in the die wall 16 and which may be moved so as to gradually decrease the flowable volume of the one or more outer die channel subsections 36. This mechanical system comprising the aforementioned 8 screws allows for easily and simply modify the flow rate ratio between gas and polymer in the polymer melt. Thereby, it is possible to fine control the density gradient of the final foamed product. For instance, thereby a tuning of 20 to 30% of the density gradient is possible.

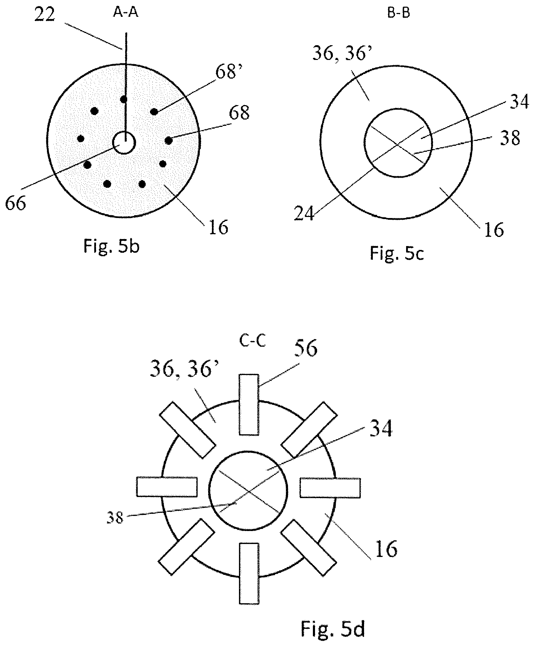

The die 10 being schematically shown in figures 5a to 5d is similar to that shown in figure 4, but differs from that in that it only comprises one blowing agent injection means 22 and an orifice 60. The orifice 60 comprises an (upstream) converging section 62 and a (downstream) diverting section 64. While the volume of the hollow part of the converging section 62 of the orifice 60 reduces in the direction from the die inlet 12 to the die outlet 14, the opposite is valid for the diverging section 64 of the orifice 60, the hollow part volume thereof is increasing in the direction from the die inlet 12 to the die outlet 14. More specifically, the converging section 62 of the orifice 60 has, seen in the longitudinal section from the die inlet to the die outlet, the form of a two-side open trapeze, wherein the left side of the trapeze is open, the right side of the trapeze is open and defines the central orifice 32 of the hollow baffle 24 and the two flanks of the trapeze are inclined with regard to the vertical axis. The angle α between the inclined flanks of the converging section 62 of the orifice 60 and the vertical axis, which is here denoted as converging angle α, is about 10°. Also the diverting section 64 of the orifice 60 has, seen in the longitudinal section from the die inlet to the die outlet, the form of a two-side open trapeze, wherein the right side of the trapeze is open, the left side of the trapeze is open and defines the central orifice 32 of the hollow baffle 24 and the two flanks of the trapeze are inclined with regard to the vertical axis. The angle β between the inclined flanks of the diverging section 64 of the orifice 60 and the vertical axis, which is here denoted as converging angle β, is about 10°. As shown in particular in figure 5b, which is a cross-sectional view along the plane A-A shown in figure 5a (i.e. a cross-sectional view of the interface between the converging section 62 and the diverging section 64 of the orifice 60), the orifice 60 comprises at the interface, seen in the cross-section of the die 10, a central orifice 66 leading downstream of the orifice 60 through the opening 32 of the hollow baffle 24 into the central die channel subsection 34. Moreover, the orifice 60 comprises at the interface, seen in the cross-section of the die 10, nine peripheral flow channels 68, 68' leading of the orifice 60 into the outer die channel subsections 36, 36'.

Figures 6a to 6e show different types of static mixers useable in the die and method in accordance with the present invention. More specifically, figures 6a and 6b show each a static mixer 48 of the x-type comprising deflection means 70 in the form of crossbars having in a plan view as well as in a side view the x-like form.

Fig. 2c shows a static mixer 48 of the baffle plate-type comprising longitudinal deflection means 70, whereas Fig. 2d and 2e show static mixers 48 with curved deflection means 70.

Subsequently, the present invention is further described by means of illustrating, but non-limiting examples.

### Examples

### Example 1

A graded polymer foam article in form of a rod was produced using a foaming machine 40 as shown in figure 2 comprising a die as shown in figure 1. Commercially available polystyrene (GPPS 153F from INEOS Styrolution) was used as polymer raw material and pentane (85:15 wt% mixture of n-pentane : iso-pentane) as the blowing agent. While the polystyrene was continuously fed via the polymer filling funnel 62 into the inter-meshing co-rotating 45 mm and L/D=42 twin-screw extruder 44 with 6 gravimetric feeders of the foaming machine 40, the blowing agent was injected into the polystyrene melt in the twin-screw extruder 44 via the blowing agent dosing unit 42 as well as into the polystyrene melt in the upstream die channel section 26 of the die 10 through the blowing agent injection means 22. More specifically, 4.5% by weight of the blowing agent was injected into the extruder via the blowing agent dosing unit 42 and an additional 0.2% by weight of the blowing agent was injected into the upstream die channel section 26 of the die 10 via the blowing agent injection means 22. The melt cooler 44 was a type 425 'Torpedo' melt cooler, whereas the static mixer 46 was a SMB Plus DN40 static mixer.

The following temperature profile was adjusted in the foaming machine:

| Extruder zones | | | | | | | | | | | | |
|---|---|---|---|---|---|---|---|---|---|---|---|---|
| Zone 0 | Zone 1 | Zone 2 | Zone 3 | | Zone 4 | Zone 5 | Zone 6 | Zone 7 | | Zone 8 | Zone 9 | Adapter |
| 90°C | 150°C | 200°C | 200°C | | 200°C | 200°C | 200°C | 185°C | | 185°C | 185°C | 185°C |
| Melt cooler | | | | Static mixer | | | | | Die | | | |
| 150°C | | | | 150 ° C | | | | | 150°C | | | |

Foamed rods were obtained, which were characterized by a low density or large cells, respectively, in the centre of the rods and a high density or small cells, respectively, in the radial peripheral part of the rods. It could be derived from cross-sections prepared from the rods that both, that there existed a gradual variation of both, the density of the foam as well as the morphology (cell size) of the cells of the foam from the centre of the rods to the radial peripheral part of the rods. The average density of the foamed rods was 50kg/m³.

### Example 2

Example 1 was repeated with the modification that an additional 0.4% by weight of the blowing agent was injected into the upstream die channel section 26 of the die 10 via the blowing agent injection means 22 instead of 0.2% by weight as in example 1.

The so produced foamed rods had an enhanced gradient in density and morphology and their average density was decreased to 45kg/m³.

### Example 3

Foamed rods were produced with a machine shown in figure 2 with the modification that as die 10 a die as shown in figure 3 was used instead of one according to figure 1. Through the blowing agent injection means 22 of this example, 0.2% by weight of carbon dioxide was injected into the polymer melt, whereas as polymer polyethylene 2602 from Sabic was fed into the twin-screw extruder 44 through the polymer filling funnel 50. The blowing agent and amount thereof as injected via the blowing agent dosing unit 52 were as in example 1.

The so produced foamed rods showed a low density or large cells, respectively, in the radial peripheral part of the rods, wherein the density gradually increased and the cell sizes gradually decreased from the radial peripheral part to the centre of the rods.

### Example 4

Foamed rods were produced with a machine shown in figure 2 with the modification that as die 10 a die as shown in figures 4a to 4d was used instead of one according to figure 1. Through the first blowing agent injection means 22 of this example, 5% by weight of cyclopentane as used in example 1 were injected into the polymer melt, whereas no blowing agent was injected via the second blowing agent injection means 22' and the polymer fed into the twin-screw extruder 44 through the polymer filling funnel 50 as well as the blowing agent and amount thereof as injected via the blowing agent dosing unit 52 were as in example 1.

The so produced foamed rods showed a low density in the radial peripheral part of the rods, wherein the density gradually increased and the cell sizes gradually decreased from the radial peripheral part to the centre of the rods. The obtained foamed rods showed a 15% density decrease in the centre of the rods as compared with the radial peripheral parts of the foamed rods.

### Example 5

Foamed rods were produced with a machine shown in figure 2 with the modification that as die 10 a die as shown in figures 5a to 5d was used instead of one according to figure 1. Through the first blowing agent injection means 22 of this example, 2% by weight of cyclopentane as used in example 1 was injected into the polymer melt. This example has been performed with polyethylene terephthalate Polyclear 1101 by Invista as the blowing agent and was repeated with polystyrenes PS 153F and 156F by Ineos Styrolution.

The so produced foamed rods showed both, in the case of using polyethylene terephthalate as well as in the case of using polystyrene as polymer, a density decrease in the centre of the rods, namely a density decrease of 15% for polyethylene terephthalate and a density decrease of 30% for polystyrene compared to the density in the radial peripheral part of the produced foamed rods.

### Example 6

Example 5 was repeated with the modification that 0 to 0.12% by weight of cyclopentane was injected as the blowing agent via the blowing agent dosing unit 22 and different amounts of carbon dioxide were injected as the blowing agent via the blowing agent injection means 22, whereas polyethylene terephthalate Polyclear 1101 by Invista was solely used as the polymer. The experiments were performed by injecting 0% by weight, with 0.03% by weight, 0.05% by weight, 0.08 % and 0.12% by weight of carbon dioxide via the blowing agent injection means 22.

The foamed rods obtained by injecting 0.03% by weight, 0.05% by weight, 0.08% and 0.12% by weight of carbon dioxide via the blowing agent injection means 22 showed an enhanced gradient in density and morphology over the cross-sectional areas of the foamed rods compared to the foamed rod obtained with injecting 0% by weight of carbon dioxide via the blowing agent injection means 22.

The foamed rods obtained by injecting 0.03% by weight, 0.05% by weight, 0.08% and 0.12% by weight of carbon dioxide via the blowing agent injection means 22 had an average foam density of 115 kg/m³, a difference of the density between the centre of the rods and the radial peripheral of the rods of 42%, a beam stiffness of 0.0193 kN/mm, a flexural modulus of 122 MPa, density normalized flexural modulus of 126 MPa and a normalized flexural modulus variation of 20%.

### Example 7

Example 6 was repeated with the modification that different amounts of nitrogen were injected as the blowing agent via the blowing agent injection means 22. The experiments were performed by injecting 0% by weight, with 0.023% by weight and 0.035% by weight of nitrogen via the blowing agent injection means 22.

The foamed rods obtained by injecting 0.023% by weight, 0.035% by weight of nitrogen via the blowing agent injection means 22 showed a finer graded structure, but the same average density as the foamed rods obtained in examples 6 using as second blowing agent carbon dioxide.

The foamed rods obtained by injecting 0.023% by weight, 0.035% by weight of nitrogen via the blowing agent injection means 22 had an average foam density of 117 kg/m³, a difference of the density between the centre of the rods and the radial peripheral of the rods of 27%, a beam stiffness of 0.0177 kN/mm, a flexural modulus of 117 MPa, density normalized flexural modulus of 128 MPa and a normalized flexural modulus variation of 22%.

### Example 8

Example 7 was repeated with the modification that different amounts of a 50:50 mixture of carbon dioxide and nitrogen were injected as the blowing agent via the blowing agent injection means 22. The experiments were performed by injecting 0% by weight and 0.08% by weight of mixture of the carbon dioxide and nitrogen via the blowing agent injection means 22.

The foamed rods obtained by injecting 0.08% by weight mixture of carbon dioxide and nitrogen via the blowing agent injection means 22 showed a coarser morphology, but the same average density as the foamed rods obtained in examples 6 using as second blowing agent carbon dioxide.

The foamed rods obtained by injecting 0.08% by weight mixture of carbon dioxide and nitrogen via the blowing agent injection means 22 had an average foam density of 112 kg/m³, a difference of the density between the centre of the rods and the radial peripheral of the rods of 20%, a beam stiffness of 0.0154 kN/mm, a flexural modulus of 109 MPa, density normalized flexural modulus of 109 MPa and a normalized flexural modulus variation of 4%.

### Reference Numeral List

- 10: Die
- 12: Die inlet
- 14: Die outlet
- 16: Die wall
- 18: Interior of the die
- 20: Die channel
- 22, 22': Blowing agent injection means
- 24: Hollow baffle
- 26: Upstream die channel section
- 28: Downstream die channel section
- 30: Middle die channel section
- 32: Opening of the hollow baffle
- 34: Central die channel subsection
- 36, 36': Outer die channel subsection
- 38: Static mixer
- 40: Foaming machine
- 42: Drive unit
- 44: Extruder
- 46: Melt cooler
- 48: Static mixer
- 50: Polymer filling funnel
- 52: Blowing agent dosing unit
- 54: Shear flow control means
- 56: Screw of shear flow control means
- 60: Orifice
- 62: Converging section of the orifice
- 64: Diverting section of the orifice
- 66: Central orifice
- 68, 68': Peripheral flow channel
- 70: Deflection means of static mixer
- α: Conversion angle
- β: Diversion angle

## Claims

1. A method for producing a graded polymer foam comprising the steps of:
a) providing a polymer melt containing at least one blowing agent,
b) providing a die comprising a die inlet, a die outlet, an outer die wall connecting the die inlet and the die outlet and bordering the die interior, at least one die channel extending within the die interior between the die inlet and the die outlet, at least one blowing agent injection means and at least one baffle extending within the die interior from a location downstream of the die inlet to a location upstream of the die outlet, wherein the at least one baffle subdivides the die channel, seen in the direction from the die inlet to the die outlet of the die, into at least two die sections, wherein the at least two die sections combine at the downstream end of the die,
c) feeding the polymer melt containing at least one blowing agent provided in step a) into the die inlet, through the die and through the die outlet of the die provided in step b),
d) injecting additional blowing agent through the at least one blowing agent injection means within the die into the polymer melt, and
e) mixing the polymer melt, after the blowing agent has been injected into it in step d) with at least one mixing means.

2. Method in accordance with claim 1, wherein the die provided in step b) comprises as at least one hollow baffle, which subdivides the die channel, seen in the direction from the die inlet to the die outlet of the die, into an upstream die channel section extending from the die inlet to the upstream end of the hollow baffle, into a downstream die channel section extending from the downstream end of the hollow baffle to the die outlet and into a middle die channel section extending from the upstream end of the hollow baffle to the downstream end of the hollow baffle, wherein the hollow baffle subdivides the middle die channel section, seen in the cross-section of the middle die channel section, into a central die channel subsection extending within the hollow baffle and into one or more outer die channel subsections extending outside of the hollow baffle, wherein the upstream die channel section splits at the upstream end of the middle die channel section into the central die channel subsection and the one or more outer die channel subsections of the middle die channel section, and wherein the central die channel subsection and the one or more outer die channel subsections of the middle die channel section combine at the downstream end of the middle die channel section to the downstream die channel section.

3. Method in accordance with claim 1 or 2, wherein the polymer melt containing blowing agent provided in step a) is fed in step d) continuously into the die inlet, through the die and through the die outlet, wherein the additional blowing agent is injected in step d) continuously and in a constant amount over time into the polymer melt or the blowing agent is injected in step d) non-continuously and/or in a varying amount over time into the polymer melt.

4. Method in accordance with any of the preceding claims, wherein the additional blowing agent is injected in step d) into the polymer melt in a position being, seen in the direction from the die inlet to the die outlet of the die, upstream of the upstream end of the baffle.

5. Method in accordance with any of claims 2 to 4, wherein the hollow baffle comprises at its upstream end an opening being the upstream end of the central die channel subsection, wherein the opening extends, seen in the cross-section of the die, from a first position on a line extending between two opposite locations of the outer die wall and through the midpoint of the cross-sectional area to a second position on the line, wherein the blowing agent is injected in step d) into the polymer melt at a position being upstream of the upstream end of the hollow baffle at a position being, seen in the cross-section of the die, between the first and second position on the line.

6. Method in accordance with any of claims 2 to 5, wherein the hollow baffle comprises at its upstream end an opening being the upstream end of the central die channel subsection, wherein the blowing agent is injected in step d) into the polymer melt at a position being located within the opening.

7. Method in accordance with any of claims 2 to 6, wherein the blowing agent is injected in step d) into the polymer melt at a position being located in the central die channel subsection or at a position being located in one of the one or more outer die channel subsections.

8. Method in accordance with any of claims 2 to 7, wherein the die interior has a circular cross-section, and wherein the hollow baffle has a circular cross-section and comprises an upstream section and a downstream section, with the downstream section having an at least essentially constant diameter and the upstream section tapering from its downstream end to its upstream end thus forming at the upstream end a central opening, and wherein each of the upstream die channel section, of the downstream die channel section, of the central die channel subsection and of the hollow baffle has a circular cross-section and wherein the one or more outer die channel subsections have an annular cross-section.

9. Method in accordance with any of claims 2 to 8, wherein the diameter of the downstream channel section tapers in the direction of the die outlet.

10. Method in accordance with any of the preceding claims, wherein the die comprises as at least one mixing means one or more, preferably 2 to 20 and more preferably 5 to 10 static mixers.

11. Method in accordance with any of claims 2 to 10, wherein the die comprises 2 to 20 and more preferably 5 to 10 static mixers, which are arranged in the central die channel subsection and/or in at least one of the one or more outer die channel subsection of the middle section of the die channel.

12. A die comprising a die inlet, a die outlet, an outer die wall connecting the die inlet and the die outlet and bordering the die interior, at least one die channel extending within the die interior between the die inlet and the die outlet, at least one blowing agent injection means and at least one baffle extending within the die interior from a location downstream of the die inlet to a location upstream of the die outlet, wherein the at least one baffle subdivides the die channel, seen in the direction from the die inlet to the die outlet of the die, into at least two die sections, wherein the at least two die sections combine at the downstream end of the die, and wherein the die comprises downstream of the at least one blowing agent injection means at least one mixing means.

13. The die accordance with claim 12, wherein the die comprises at least one hollow baffle, which subdivides the die channel, seen in the direction from the die inlet to the die outlet of the die, into an upstream die channel section extending from the die inlet to the upstream end of the hollow baffle, into a downstream die channel section extending from the downstream end of the hollow baffle to the die outlet and into a middle die channel section extending from the upstream end of the hollow baffle to the downstream end of the hollow baffle, wherein the hollow baffle subdivides the middle die channel section, seen in the radial direction of the middle die channel section, into a central die channel subsection extending within the hollow baffle and into one or more outer die channel subsections extending outside of the hollow baffle, wherein the upstream die channel section splits at the upstream end of the middle die channel section into the central die channel subsection and the one or more outer die channel subsections of the middle die channel section, and wherein the central die channel subsection and the one or more outer die channel subsections of the middle die channel section combine at the downstream end of the middle die channel section to the downstream die channel section.

14. The die accordance with claim 12 or 13, wherein the die comprises 2 to 20 and preferably 5 to 10 static mixers, which are preferably arranged in the central die channel subsection and/or in at least one of the one or more outer die channel subsection of the middle section of the die channel.

15. A foaming machine comprising an extruder with an extruder outlet and a die in accordance with any of claims 12 to 14, wherein the die inlet of the die is directly or indirectly connected with the extruder outlet.
